# EUROPEAN PATENT APPLICATION

(11) **EP 1 976 276 A2**
(43) Date of publication of application: **01.10.2008**
(21) Application number: 08004654.3
(22) Date of filing: 13.03.2008
(51) Int. Cl.: H04N 5/44

(54) **Broadcasting receiving apparatus and broadcasting receiving method**

(30) Priority: 29.03.2007 JP 2007086117
(71) Applicant: Kabushiki Kaisha Toshiba, Minato-ku, Tokyo 105-8001 (JP)
(72) Inventor: Oura, Kazumasa, c/o Toshiba Corporation, Tokyo 105-8001 (JP)
(74) Representative: HOFFMANN EITLE

(57) **Abstract**

According to one embodiment, there is provided a broadcasting receiving apparatus including a memory section (35) which stores table information (FIG. 4) having a set country where setting is made for digital broadcasting reception, surrounding countries of the set country and bandwidths of frequencies according to the surrounding countries, a tuner section (12) which receives and demodulates a digital broadcasting signal so as to output a demodulated signal, a searching section (30) which sequentially searches for digital broadcasting signals of the set country and the surrounding countries which can be received by the tuner section based on the bandwidths of the set country and the surrounding countries in the table information, and generates a channel list (FIG. 5) in which the frequencies of the receivable digital broadcasting signals and country information are related with respective channels, and a control section (30) which, when receiving a channel instruction signal, selects channels based on the frequencies of the digital broadcasting signals in the channel list by means of the tuner section.

## Description

One embodiment of the invention relates to a broadcasting receiving apparatus which searches for a channel of a tuner section, and particularly relates to the broadcasting receiving apparatus and a broadcasting receiving method which search for channels related with broadcasting signals of plurality of countries.

Recently, according to wide use of digital techniques, utilization of terrestrial digital broadcasting is being improved very much, and broadcasting receiving apparatuses which receive terrestrial digital broadcasting are growing popular. In such broadcasting receiving apparatuses, it is known that when the broadcasting receiving apparatuses are installed, a searching process as to what broadcasting can be received is executed and channels are registered. The searching process can be executed particularly on broadcasting signals from a plurality of countries.

Patent Document 1 (Jpn. Pat. Appln. KOKAI Publication No. 6-46427) discloses a television apparatus which automatically tune in to receivable channels which are different in places of destination "Japan", "Europe" and "North America". As a result, the apparatus can automatically tune in to receivable channels in a plurality of destinations.

In the conventional technique of Patent Document 1, however, in the case where automatic tuning to Europe as destination is done, when an automatic search is conducted in Switzerland, broadcasting signals can be received not only from Switzerland but also from France, Germany, Italy and Austria that are countries in the periphery of the Switzerland.

At this time, since broadcasting signals in countries other than the set country are interpreted as the reception broadcasting of the set country, the broadcasting signals from the other countries cannot be properly displayed on a screen.

The present invention is devised in view of the above circumstance, and its object is to provide a broadcasting receiving apparatus and a broadcasting receiving method which can execute a stable searching process based on frequency bandwidths of broadcasting signals in set countries and surrounding countries.

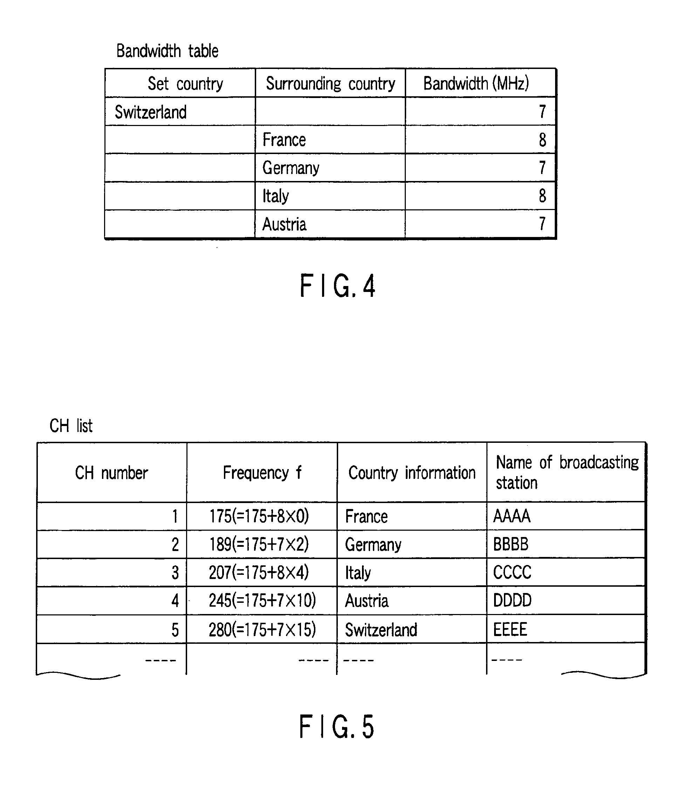

One embodiment for achieving the above object is a broadcasting receiving apparatus comprising:
a memory section (35) which stores table information (FIG. 4) having a set country where setting is made for digital broadcasting reception, surrounding countries of the set country and bandwidths of frequencies according to the surrounding countries;
a tuner section (12) which receives and demodulates a digital broadcasting signal so as to output a demodulated signal;
a searching section (30) which sequentially searches for digital broadcasting signals of the set country and the surrounding countries which can be received by the tuner section based on the bandwidths of the set country and the surrounding countries in the table information, and generates a channel list (FIG. 5) in which the frequencies of the receivable digital broadcasting signals and country information are related with respective channels; and
a control section (30) which, when receiving a channel instruction signal, selects channels based on the frequencies of the digital broadcasting signals in the channel list by means of the tuner section.

As a result, table information about the frequency bandwidths of the broadcasting signals in a plurality of set countries and their surrounding countries is prepared, and the process for searching for receivable broadcasting stations can be executed securely by using the bandwidths of the respective countries.

The invention can be more fully understood from the following detailed description when taken in conjunction with the accompanying drawings, in which:
FIG. 1 is a block diagram illustrating one example of a constitution of a broadcasting receiving apparatus according to one embodiment of the present invention;
FIG. 2 is a flow chart illustrating one example of a channel searching process of the broadcasting receiving apparatus according to one embodiment of the present invention;
FIG. 3 is a flow chart illustrating detailed one example of the channel searching process of the broadcasting receiving apparatus according to one embodiment of the present invention;
FIG. 4 is an explanatory diagram illustrating one example of set countries to be used for the channel searching process of the broadcasting receiving apparatus according to one embodiment of the present invention;
FIG. 5 is an explanatory diagram illustrating one example of a channel list to be generated by the channel searching process of the broadcasting receiving apparatus according to one embodiment of the present invention;
FIG. 6 is an explanatory diagram illustrating one example of a setting screen of the channel searching process of the broadcasting receiving apparatus according to one embodiment of the present invention; and
FIG. 7 is a flow chart illustrating one example of an on-screen display process to be executed by using the channel list generated by the broadcasting receiving apparatus according to one embodiment of the present invention.

An embodiment of the present invention is described in detail below with reference to the drawings.

### <Broadcasting Receiving Apparatus according to One Embodiment of the Present Invention>

### (Constitution and Operation of the Broadcasting Receiving Apparatus)

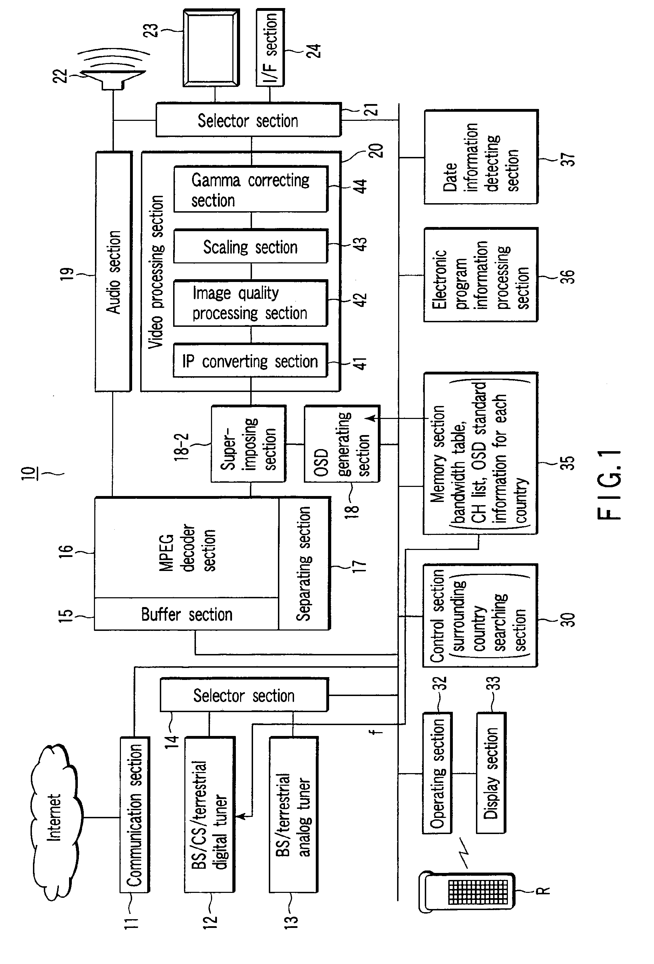

One example of the constitution of the broadcasting receiving apparatus such as a digital television device according to one embodiment of the present invention is described in detail below with reference to the drawings. FIG. 1 is a block diagram illustrating one example of the constitution of the broadcasting receiving apparatus according to one embodiment of the present invention.

The broadcasting receiving apparatus 10 is a television device as one example shown in FIG. 1, and a control section 30 is connected to respective sections via a data bus in order to control the entire operation. The broadcasting receiving apparatus 10 includes an MPEG decoder section 16 which constitutes a reproducing side and the control section 30 which controls the operation of the apparatus main body as main components. The broadcasting receiving apparatus 10 has an input-side selector section 14 and an output-side selector section 21. The input-side selector section 14 is connected to a communication section 11 which has LAN and a mail function, a BS/CS/terrestrial digital tuner section 12, and a BS/terrestrial analog tuner section 13.

The broadcasting receiving apparatus 10 further includes a buffer section 15, a separating section 17, the MPEG decoder section 16, an OSD (on-screen display) generating section 18, and a superimposing section 18-2. The buffer section 15 temporarily stores a demodulated signal from the BS/CS/terrestrial digital tuner section 12 therein. The separating section 17 separates a packet as the stored demodulated signal according to types. The MPEG decoder section 16 executes the MPEG decoding process on a packet for a video and sound supplied from the separating section 17, and outputs a video/audio signal. The OSD generating section 18 generates a video signal for superimposing operation information and the like. The superimposing section 18-2 superimposes operation information, caption information and the like generated by the OSD generating section 18. The broadcasting receiving apparatus 10 further includes an audio processing section 19, a video processing section 20, the selector section 21, a speaker section 22, a display section 23 and an interface section 24. The audio processing section 19 executes an amplifying process on an audio signal from the separating section 17. The video processing section 20 receives video signals from the MPEG decoder section 16 and the OSD generating section 18 and executes a desired video process. The selector section 21 selects output destinations of the audio signal and the video signal. The speaker section 22 outputs an audio according to the audio signal from the audio processing section 19. The display section 23 is connected to the selector section 21 and displays a video picture according to the given video signal on a liquid crystal display screen. The interface section 24 communicates with an external apparatus.

The video processing section 20 has an IP converting section 41, an image quality processing section 42, a scaling section 43 and a gamma correcting section 44. The IP converting section 41 converts an interlace signal into a progressive signal. The image quality processing section 42 executes a coring process and an enhancing process. The scaling section 43 executes a scaling process. The gamma correcting section 44 makes gamma correction on a video signal.

The broadcasting receiving apparatus 10 further includes a memory section 35, an electronic program information processing section 36 and a date information detecting section 37 that are connected to the control section 30 via the data bus. The memory section 35 suitably records video information from the BS/CS/terrestrial digital tuner section 12 and the BS/terrestrial analog tuner section 13. The electronic program information processing section 36 acquires electronic program information from a broadcasting signal and displays the information on the screen. The date information detecting section 37 extracts current date information from TOT (Time Offset Table) and TDT (Time Date Table) included in a received and demodulated digital broadcasting signal, for example. The broadcasting receiving apparatus 10 further includes an operating section 32 which is connected to the control section 30 via the data bus and receives a user's operation and an operation of a remote controller R, and a display section 33 which displays an operating signal. The remote controller R enables an operation which is approximately equivalent to that of the operating section 32 provided to the main body of the broadcasting receiving apparatus 10, and enables various settings such as tuner operation.

The control section 30 particularly has a function for searching for broadcasting signals of a set country and surrounding countries in the tuner section according to one embodiment of the present invention. Accordingly, the memory section 35 further stores a bandwidth table, mentioned later, shown in FIG. 4, a channel list shown in FIG. 5, and OSD standard information about a plurality of countries (for example, language information according to countries) therein using a flash ROM or the like.

In the broadcasting receiving apparatus 10 having such a constitution, a broadcasting signal is input from a reception antenna into the BS/CS/terrestrial digital tuner section 12, and channels are selected therein. A selected and demodulated signal of a packet format is separated into packets according to types by the separating section 17, and an audio/video packet is decoded by the MPEG decoder section 16 so as to be a video/audio signal. The video/audio signal is supplied to the audio processing section 19 and the video processing section 20. In the video processing section 20, an interlace signal of the given video signal is converted into a progressive signal by the IP converting section 41, and the video signal is subject to the coring process and the enhancing process in the image quality processing section 42. The video signal is subject to the scaling process in the scaling section 43, and the video signal is subject to the gamma correcting process in the gamma correcting section 44 so as to be supplied to the selector section 21.

The selector section 21 supplies the video signal to the display section 23 according to a control signal from the control section 30, and thus a video picture according to the video signal is displayed on the display section 23. An audio according to the audio signal from the audio processing signal 19 is output from the audio speaker section 22.

Various operation information and caption information generated by the OSD generating section 18 are superimposed on the video signal according to the broadcasting signal by the superimposing section 18-2, and passes through the video processing section 20 so that a video picture is accordingly displayed on the display section 23.

### <The Channel Searching Process according to One Embodiment of the Present Invention>

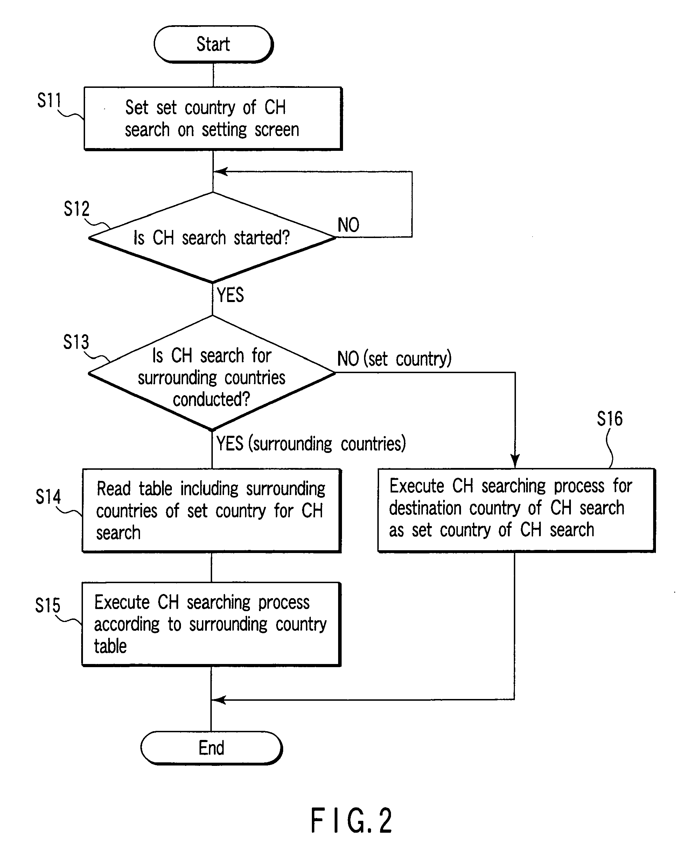

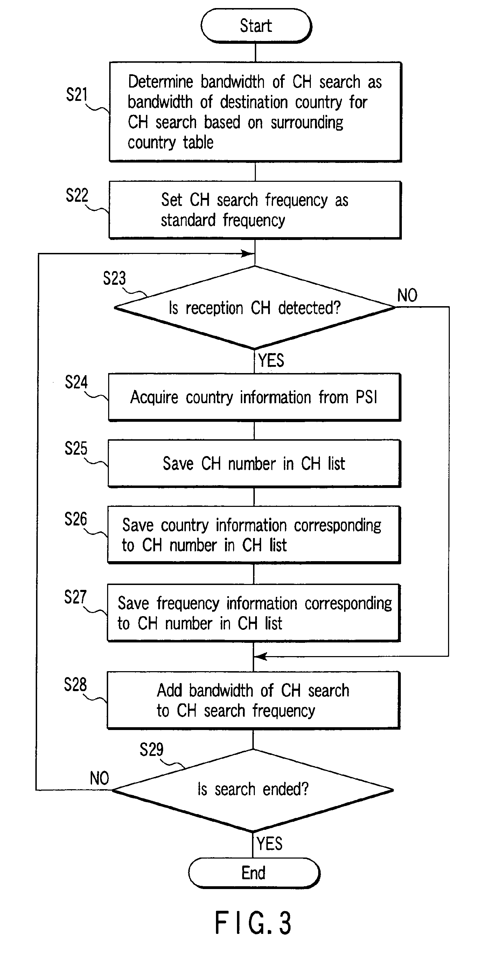

The channel searching process according to one embodiment of the present invention is described in detail below with reference to the drawings. FIG. 2 is a flow chart illustrating one example of the channel searching process of the broadcasting receiving apparatus according to one embodiment of the present invention. FIG. 3 is a flow chart illustrating one detailed example of the channel searching process of the broadcasting receiving apparatus according to one embodiment of the present invention.

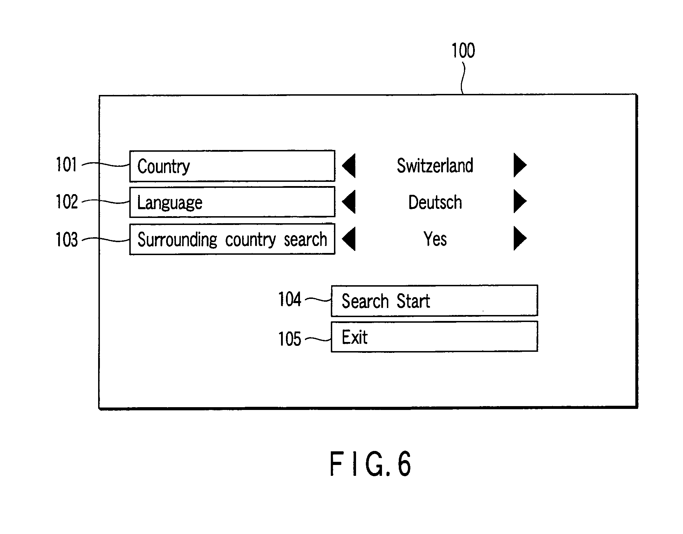

FIG. 4 is an explanatory diagram illustrating one example of set countries to be used for the channel searching process of the broadcasting receiving apparatus according to one embodiment of the present invention. FIG. 5 is an explanatory diagram illustrating one example of a channel list generated by the channel searching process of the broadcasting receiving apparatus. FIG. 6 is an explanatory diagram illustrating one example of a setting screen of the channel searching process of the broadcasting receiving apparatus.

The following respective steps of the flow charts in FIGS. 2, 3 and 7 can be replaced by circuit blocks, and thus all the steps in the flow charts can be defined as blocks.

### (Generation of the Channel List)

A process for generating the channel list according to the channel searching process using the bandwidth table shown in FIG. 4 is described in detail with reference to the flow charts in FIGS. 2 and 3.

For example, in the broadcasting receiving apparatus of the present invention, a set country set by a user as to broadcasting reception is specified and a reception search is conducted in a continent area such as Europe where digital broadcasting waves whose detailed standards are different in respective countries can be received. At this time, receivable broadcasting is sequentially searched for according to the broadcasting standards of the respective countries based on the frequency bandwidth table (FIG. 4) of broadcasting signals in the set country and surrounding countries.

That is to say, for example, when the set country is Switzerland (bandwidth is 7 MHz), the bandwidths of adjacent countries are not necessarily 7 MHz. As shown in FIG. 4, the bandwidths of France, Germany, Italy and Austria adjacent to Switzerland are 8 MHz, 7 MHz, 8 MHz and 7 MHz, respectively. When the bandwidth table (FIG. 4) including frequencies of the broadcasting signals in the set country and its surrounding countries is not recorded in the memory section 35, broadcasting signals are sequentially searched for without a process for skipping from a standard frequency (175 MHz, for example). Therefore, this is very inefficient process.

On the other hand, when the bandwidth table (FIG. 4) including the broadcasting signal frequencies of the set country and its surrounding countries is recorded in the memory section 35 of the broadcasting receiving apparatus 10 shown in FIG. 1, the efficient and secure searching process can be realized. This is realized only by sequentially searching for integral multiples of 7 MHz and 8 MHz starting from the standard frequency (175 MHz, for example) up to an upper limit frequency (860 MHz, for example) because the bandwidths of France, Germany, Italy and Austria in the periphery of Switzerland are 7 MHz or 8 MHz.

That is to say, the broadcasting receiving apparatus 10 sets the channel searching process on the setting screen shown in FIG. 6 by means of the operation of the control section 30 (step S11). That is to say, a user determines a country 101 and a language 102 (option is determined according to the country 101), and selects a search for surrounding countries (yes) or a search for only set country (no) on the setting screen 100 in FIG. 6. When the search is started, an icon 104 is operated. When the search is ended, an icon 105 is operated.

When the operation of the icon 104 is detected (step S12), the control section 30 determines whether the search for surrounding countries is selected on the setting screen 100 (step S13). When the control section 30 determines that the search for surrounding countries is selected on the setting screen 100, the bandwidth table (FIG. 4) is read from the memory section 35 (step S14). The channel searching process is executed based on information about the countries in the bandwidth table (step S15).

When the control section 30 determines that the search for the set country is selected on the setting screen 100, the control section 30 conducts a channel search the memory section 35 for only set country as a destination country by using only the bandwidth of the set country in the bandwidth table (FIG. 4) (step S16).

As a concrete process, the control section 30 uses the bandwidth of the respective surrounding countries in FIG. 4 as the bandwidth of the channel search as shown in the flow chart of FIG. 3 (step S21). That is to say, when the set country is Switzerland, the surrounding countries are France, Germany, Italy and Austria. The control section 30 determines the frequency of the channel search as the standard frequency (175 MHz, for example) for the BS/CS/terrestrial digital tuner section 12 (step S22).

When the BS/CS/terrestrial digital tuner section 12 detects a reception channel, the control section 30 acquires country information from PSI (Program Specific Information) detected by the separating section 17 (step S24). Channel numbers are saved in the channel list shown in FIG. 5 (step S25). In FIG. 5, for example, "1" is saved. The country information acquired from PSI is set to France, for example, in the channel list as the country information corresponding to the channel number (step S26).

The control section 30 sets the frequency information corresponding to the channel number "1" to 175 MH (175 MHz + 8 MHz x 0) in the channel list shown in FIG. 5 (step S27). The control section 30 adds the bandwidth of the channel search (for example, 7 MHz) to the channel search frequency (for example, 175 MHz) (step S28). This process is continued until the channel search is ended, for example, until 860 MHz as one example of the upper limit of the allocated frequency of the terrestrial digital broadcasting in Europe (step S29).

When the reception channel cannot be detected at step S23, the sequence jumps to step S28 immediately, and this process is continued until 860 MHz as the upper limit of the allocated frequency of the terrestrial digital broadcasting in Europe (step S28).

When such a process is continued from the standard frequency (for example, 7 MHz) to 860 MHz as the upper limit of the allocated frequency, the channel list shown in FIG. 5 is created. Even if the set country is Switzerland, country information which is not identical to the set country is recorded together with the receivable broadcasting frequency correspondingly to the channel number.

Since the bandwidth information inherent to the respective countries is present, when the set country is Switzerland, the bandwidths of its surrounding countries including France, Germany, Italy and Austria are taken into consideration, and the searching process is executed on 7 MHz and 8 MHz. For this reason, the efficient searching process is enabled stably. That is to say, in one example of the channel list of FIG. 5, 189 MHz (= 175 MHz + 7 MHz x 2) is saved for Germany and channel 2, 207 MHz (= 175 MHz + 8 MHz x 4) is saved for Italy and channel 3, 245 MHz (= 175 MHz + 7 MHz x 10) is saved for Austria and channel 4, and 280 MHz (= 175 MHz + 7 MHz x 15) is saved for Switzerland and channel 5. Similarly, the names of broadcasting stations according to the respective channels are saved as shown in the channel list of FIG. 5.

### (Application of the Channel List)

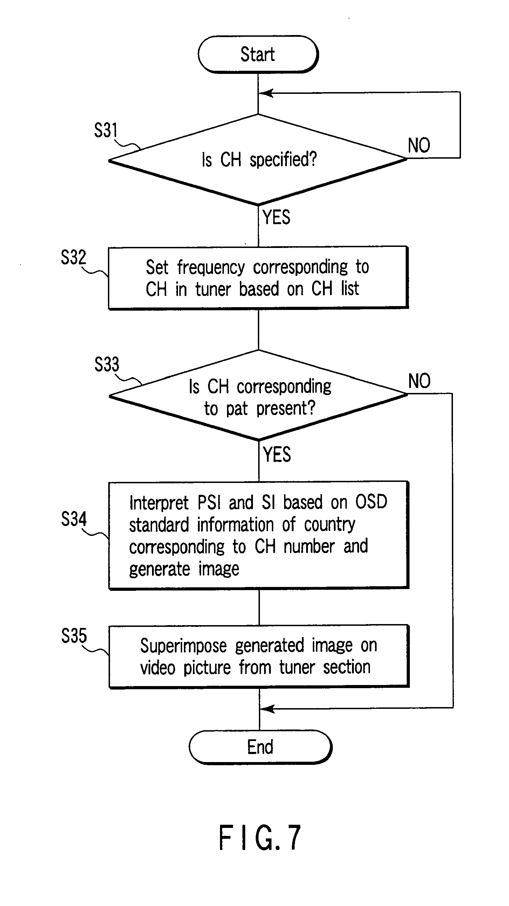

The cannel list information acquired in the above manner is applied to, for example, the process for receiving digital broadcasting signals as show below. FIG. 7 is a flow chart illustrating one example of an on-screen display process to be executed using the channel list generated by the broadcasting receiving apparatus according to one embodiment of the present invention.

In the broadcasting receiving apparatus 10 according to one embodiment of the present invention, one example of the on-screen display process to be executed by using the channel list is described with reference to the flow chart in FIG. 7.

That is to say, in the broadcasting receiving apparatus 10, when the control section 30 detects a channel operation of the remote controller R and turning-on of the power supply (step S31), the control section 30 reads a frequency according to the given channel signal or the channel signal recorded in the memory section 35 from the channel list (FIG. 5) stored in the memory section 35, and sets the read frequency to the BS/CS/terrestrial digital tuner section 12 (step S32). That is to say, when "1ch" is selected, as shown in the channel list (FIG. 5), 183 MHz is set in the BS/CS/terrestrial digital tuner 12.

When the control section 30 determines that a channel corresponding to PAT (Program Association Table) of PSI (Program Specific Information) to be output from the separating section 17 is present (step S33), operation information, management information and caption information are interpreted by OSD standard information corresponding to country information according to the channel number shown in the channel list (FIG. 5) based on the PSI and SI (Service Information) to be output from the separating section 17. Image information to be superimposed is generated (step S34).

Concretely, when channel 2 shows Germany in the channel list, the control section 30 reads the OSD standard information about Germany from the memory section 35, and operation information, management information and caption information of PSI and SI (Service Information) are interpreted based on the OSD standard information. As a result, as to the caption information of broadcasting in Germany, a superimposing image is generated as a German caption image. Similarly in the case of channel 3, as to caption information of broadcasting in Italy, a superimposing image is generated as an Italian caption image.

The superimposing images are superimposed on video signal supplied from the separating section 17 by the superimposing section 18-2 and are supplied to the video processing section 20. The superimposing images are then displayed on the display section 23 as caption to be superimposed on program video picture (step S35).

According to the broadcasting receiving apparatus 10 in the embodiment of the present invention, the country information are managed for the respective channels by the channel list (FIG. 5). For this reason, the capture information of broadcasting in surrounding countries (France, Germany, Italy and Austria) of the set country (Switzerland) where broadcasting can be received can be displayed on the screen securely according to the management information of these countries.

Further, according to the broadcasting receiving apparatus 10 in the embodiment of the present invention, the bandwidth table including the broadcasting signals of the set country and the surrounding countries is previously prepared in the memory section and is used, so that the searching process can be securely executed on Europe such as the surrounding countries (France, Germany, Italy and Austria) of the set country (Switzerland) where the broadcasting signal can be received.

According to the embodiment, a person skilled in the art can realize the present invention, and further easily arrives at various modified examples of the embodiment, and thus can apply the present invention to various embodiments without inventive ability. The present invention, therefore, covers a wide range where the invention is consistent with the disclosed principle and new feature, and thus is not limited to the above embodiment.

## Claims

1. A broadcasting receiving apparatus **characterized by** comprising:
a memory section (35) which stores table information (FIG. 4) having a set country where setting is made for digital broadcasting reception, surrounding countries of the set country and bandwidths of frequencies according to the surrounding countries;
a tuner section (12) which receives and demodulates a digital broadcasting signal so as to output a demodulated signal;
a searching section (30) which sequentially searches for digital broadcasting signals of the set country and the surrounding countries which can be received by the tuner section based on the bandwidths of the set country and the surrounding countries in the table information, and generates a channel list (FIG. 5) in which the frequencies of the receivable digital broadcasting signals and country information are related with respective channels; and
a control section (30) which, when receiving a channel instruction signal, selects channels based on the frequencies of the digital broadcasting signals in the channel list by means of the tuner section.

2. The broadcasting receiving apparatus according to claim 1, **characterized in that** the country information about the receivable digital broadcasting signals in the channel list includes at least one of the set country and the surrounding country of the set country.

3. The broadcasting receiving apparatus according to claim 1, **characterized by** further comprising a superimposing section (18, 18-2) which processes information extracted from the demodulated signal of the tuner section according to the country information in the channel list so as to generate an image signal, and superimposes the image signal obtained on a video signal based on the demodulated signal.

4. The broadcasting receiving apparatus according to claim 1, **characterized by** further comprising a superimposing section (18, 18-2) which extracts information from the demodulated signal of the tuner section so as to generate an image signal based on a language corresponding to the country information in the channel list, and superimposes the image signal on a video signal obtained based on the demodulated signal.

5. The broadcasting receiving apparatus according to claim 1, **characterized by** further comprising a display section which displays a video picture on a screen based on the demodulated signal of the tuner section.

6. A broadcasting receiving method **characterized by** comprising:
preparing table information (FIG. 4) having a set country where setting is made for digital broadcasting reception, surrounding countries of the set country and bandwidths of frequencies corresponding to the surrounding countries;
sequentially searching for digital broadcasting signals of the set country and the surrounding countries which can be received by the tuner section based on the bandwidths of the frequencies of the set country and the surrounding countries in the table information;
generating a channel list (FIG. 5) in which the frequencies of the receivable digital broadcasting signals and country information are related with respective channels; and
when receiving a channel instruction, selecting channels based on the frequencies of the digital broadcasting signals in the channel list by means of the tuner section.

7. The broadcasting receiving method according to claim 6, **characterized in that** the country information about the receivable digital broadcasting signals in the channel list includes at least one of the set country and the surrounding country.

8. The broadcasting receiving method according to claim 6, **characterized by** further comprising:
demodulating a broadcasting signal by means of the tuner section so as to acquire the demodulated signal;
processing information extracted from the demodulated signal according to the country information in the channel list so as to generate an image signal; and
superimposing the image signal on a video signal obtained based on the demodulated signal.

9. The broadcasting method according to claim 6, **characterized in that** the broadcasting signal is demodulated by the tuner section so that the demodulated signal is obtained,
information is extracted from the demodulated signal, and an image signal is generated based on a language corresponding to the country information in the channel list, and
the image signal is superimposed on a video signal obtained based on the demodulated signal.
